# DEMANDE DE BREVET EUROPEEN

(11) **EP 1 058 455 A1**
(43) Date de publication de la demande: **06.12.2000**
(21) Numéro de dépôt: 00410054.1
(22) Date de dépôt: 26.05.2000
(51) Int. Cl.: H04N 5/85, H04N 9/804

(54) **Décodeur de sequence d'image pour advance rapide**

(30) Priorité: 28.05.1999 FR 9906916
(71) Demandeur: STMicroelectronics S.A., 94250 Gentilly (FR)
(72) Inventeur: van den Bossche, Nadia, 38660 le Touvet (FR)
(74) Mandataire: de Beaumont, Michel

(57) **Abrégé**

L'invention concerne un circuit pour décoder des première et deuxième images recherchées (Dₙ, Dₙ₊₃) non consécutives prises dans une séquence d'images codées (Dₙ, Dₙ₊₁, Dₙ₊₂, Dₙ₊₃) séparées par des codes de début d'image (SC), ladite séquence étant tronçonnée en une pluralité de paquets de données cryptées (Pᵢ, Pᵢ₊₁, Pᵢ₊₂, Pᵢ₊₃, Pᵢ₊₄, Pᵢ₊₅, Pᵢ₊₆), comprenant :
un processeur (5) pour sélectionner les paquets de données (Pᵢ, Pᵢ₊₁, Pᵢ₊₄, Pᵢ₊₅) qui contiennent des données des images recherchées (Dₙ, Dₙ₊₃) et pour marquer l'en-tête du dernier paquet de données cryptées contenant des données de la première image recherchée (Pᵢ₊₁),
un circuit de filtrage (11) placé en sortie d'un décrypteur pour supprimer les données décryptées (Dₙ₊₁) suivant le code de début d'image (SCₙ₊₁) dans le paquet de données à l'en-tête marqué (Pᵢ₊₁), et supprimer les données décryptées (Dₙ₊₂) précédant le code de début d'image (SCₙ₊₃) dans le paquet de données sélectionné suivant (Pᵢ₊₄).

## Description

La présente invention concerne les circuits de décodage appliqués au traitement d'images mobiles telles que les images de télévision, et plus particulièrement un circuit de décodage d'images codées selon la norme MPEG ou DVD et stockées dans un disque versatile numérique (DVD).

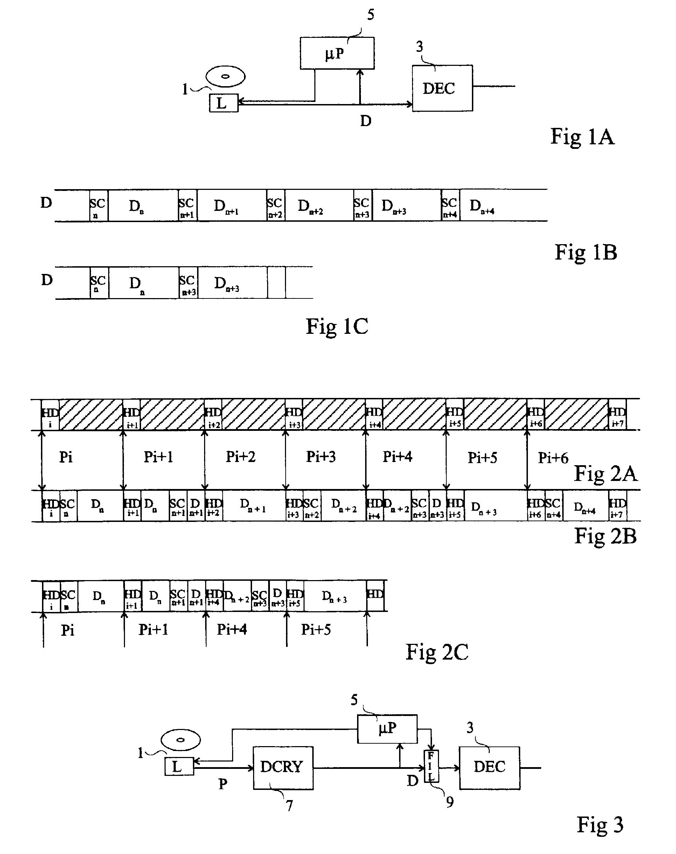

La figure 1A représente schématiquement les éléments principaux d'un circuit permettant de décoder une séquence d'images codées selon la norme MPEG ou DVD et stockées dans un disque numérique. Un lecteur de disque 1 fournit des données numériques codées D à un décodeur 3 sous le contrôle d'un microprocesseur 5. Le décodeur 3 est un décodeur classique selon la norme MPEG ou DVD. Le microprocesseur 5 gère la lecture du disque, c'est-à-dire détermine quelles données seront lues dans le disque et transmises au décodeur 3.

La figure 1B représente la structure des données numériques fournies au décodeur 3. Ces données peuvent être des données audio, graphiques ou vidéo, mais pour des raisons de clarté, on suppose dans un premier temps que les données sont uniquement une suite d'images numériques codées D dont des images Dₙ à Dₙ₊₄ sont illustrées. Le début des données de chaque image numérique est un code de début d'image SC, qui sert notamment à séparer la fin d'une image du début de l'image suivante. Ce code de début d'image SC peut être un code de début d'image seule (PSC), mais aussi un code de début de groupe d'images (GOP) ou un code de début de séquence d'images ou de groupes (SEQ). On utilise ici la référence SC par mesure de clarté. Quand on veut afficher des images D consécutives, les images sont décodées l'une après l'autre puis fournies à un dispositif d'affichage (non représenté).

Cependant, on peut vouloir décoder des images non consécutives de la séquence d'images. Par exemple, pour une lecture rapide, ou avance rapide d'une séquence, on procède classiquement en décodant puis en affichant seulement une image sur 10 ou sur 20. Une fonction du microprocesseur 5 est dans ce cas de commander la lecture dans le disque et la transmission au décodeur des images recherchées.

La figure 1C représente les données transmises au décodeur 3 par le microprocesseur 5 lors d'une lecture rapide de la séquence d'images de la figure 1B. Pour des raisons de clarté, la lecture rapide de la séquence d'images correspond ici à la lecture d'une image sur trois. Ainsi, le microprocesseur 5 commande au lecteur 1 de transmettre à la suite l'image Dₙ puis l'image Dₙ₊₃.

En plus du codage qui vient d'être décrit, les images codées sont tronçonnées en paquets de données de taille réduite et constante bien adaptée à un traitement numérique. D'autre part, par mesure de protection contre le piratage, les données de ces paquets de données, incluant les codes de début d'image, sont cryptées. Il en résulte que les images D ne peuvent pas être fournies au décodeur 3 directement sous la forme décrite en relation avec les figures 1B et 1C. On notera que les données décodées fournies par le décodeur 3 peuvent être affichées par un dispositif d'affichage, mais qu'elles ne peuvent pas être utilisées pour réaliser un enregistrement pirate de bonne qualité.

La figure 2A représente schématiquement plusieurs paquets P de données numériques cryptées, Pᵢ à Pᵢ₊₆, transmis depuis le lecteur 1. Chaque paquet de données cryptées est précédé d'un en-tête HD non crypté. Les paquets de données cryptées ne peuvent pas être décryptés par le microprocesseur, par contre ce dernier peut lire les informations contenues dans l'en-tête de chaque paquet. Les en-têtes servent en outre à l'identification et à la manipulation des paquets de données.

La figure 2B représente schématiquement le contenu des paquets de données cryptées Pᵢ à Pᵢ₊₆ de la figure 2A. La taille d'un paquet de données, de l'ordre de 2000 octets, est très inférieure à la taille d'une image, classiquement plusieurs dizaines de fois supérieure. Les données numériques des images codées D sont réparties à la suite dans des paquets de données successifs, les données de chaque paquet de données étant cryptées. Les données d'une image D ne correspondent pas forcément à un nombre entier de paquets de données, ainsi les dernières données d'une image peuvent partager un paquet de données avec les premières données d'une image suivante. On notera aussi que la taille d'une image codée n'est pas fixe et peut varier avec chaque image, ce qui entraîne que le nombre de paquets de données correspondant à une image peut varier. Toutefois, pour des raisons de clarté, on a pris comme exemple des images D de taille unique réduite égale à 1,5 fois seulement la taille d'un paquet de données P.

L'image Dₙ et son code de début d'image SCₙ sont cryptés à cheval sur les paquets de données Pᵢ et Pᵢ₊₁ ; l'image Dₙ₊₁ et son code de début d'image SCₙ₊₁ sont cryptés à cheval sur les paquets de données Pᵢ₊₁ et Pᵢ₊₂ ; l'image Dₙ₊₂ et son code de début d'image SCₙ₊₂ sont cryptés à cheval sur les paquets de données Pᵢ₊₃ et Pᵢ₊₄ ; l'image Dₙ₊₃ et son code de début d'image SCₙ₊₃ sont cryptés à cheval sur les paquets de données Pᵢ₊₄ et Pᵢ₊₅.

Une adresse de stockage est associée à chaque paquet de données et une zone du disque numérique est classiquement réservée à un tableau de correspondance entre ces adresses et le contenu des paquets de données. Ce tableau permet notamment de faire la correspondance entre le numéro des images dans la séquence d'images, et les adresses des paquets de données qui contiennent ces images. Une fois un paquet de données identifié par son en-tête, son adresse permet, par l'intermédiaire du tableau de correspondance, de déterminer quelles données sont contenues dans le paquet de données. Notamment, il est possible de déterminer si un paquet de données contient à la fois les dernières données d'une image et les premières données d'une image suivante.

Quand on désire décoder à la suite toutes les images consécutives d'une séquence, il suffit de décrypter l'un après l'autre tous les paquets de données P, puis de fournir les images D obtenues au décodeur 3. Cependant, lorsqu'on veut décoder deux images non consécutives, le microprocesseur 5 ne peut pas demander au dispositif 1 de ne lire dans le disque que les données des images Dₙ et Dₙ₊₃. En effet, le début ou la fin des images recherchées peuvent, comme on vient de le voir, être cryptés dans un paquet de données qui contient en outre des données d'une image précédente ou suivante. Or, avant décryptage on n'a accès qu'aux en-têtes de paquets, les autres informations étant cryptées. On ne peut donc pas reconnaître les codes de début d'image.

La figure 2C représente les paquets de données qu'il faut lire pour obtenir les données des deux images recherchées Dₙ et Dₙ₊₃. Le paquet de données Pᵢ, suivi du paquet de données Pᵢ₊₁, contient l'image Dₙ. Le paquet de données Pᵢ₊₄, suivi du paquet de données Pᵢ₊₅, contient l'image Dₙ₊₃. Cependant, le paquet de données Pᵢ₊₁ contient non seulement des données de l'image Dₙ, mais également le code de début d'image et des données de l'image Dₙ₊₁. De même, le paquet de données Pᵢ₊₄ contient la fin des données cryptées de l'image Dₙ₊₂. Une fois décryptées, les images incomplètes Dₙ₊₁ et Dₙ₊₂ forment des données parasites entre les images Dₙ et Dₙ₊₃ recherchées. Ces données parasites ne forment pas une image, et elles ne peuvent pas être fournies au décodeur sans provoquer son dysfonctionnement.

Un objet de la présente invention est de réaliser un circuit capable de décrypter et de décoder deux images recherchées non consécutives prises dans une séquence d'images cryptées.

Un autre objet de la présente invention est de prévoir un tel circuit qui ne permette pas de copier les images décryptées, et qui n'accroisse pas la charge de travail du microprocesseur de façon significative.

Pour atteindre ces objets, ainsi que d'autres, la présente invention prévoit un circuit intégré pour décoder des première et deuxième images recherchées non consécutives prises dans une séquence d'images codées séparées les unes des autres par des codes de début d'image, ladite séquence étant tronçonnée en une pluralité de paquets de données cryptées, les paquets ayant des longueurs fixes prédéterminées, chaque paquet comportant un en-tête non crypté d'identification, et étant notamment associé à des informations sur le numéro de la portion d'image qu'il contient, comprenant en outre :
un processeur pour sélectionner à partir desdites informations associées aux paquets de données cryptées, les paquets de données qui contiennent des données des images recherchées et pour marquer l'en-tête du dernier paquet de données cryptées contenant des données de la première image recherchée,
un décrypteur recevant les paquets de données sélectionnés,
un circuit de filtrage placé en sortie du décrypteur pour supprimer les données décryptées qui suivent le code de début d'image dans le paquet de données dont l'en-tête a été marqué, et supprimer les données décryptées qui précédent le code de début d'image dans le paquet de données sélectionné suivant, et
un décodeur pour décoder les données décryptées.

Selon un mode de réalisation de la présente invention, le décrypteur, le circuit de filtrage et le décodeur font partie d'un même circuit intégré de sorte que les données décryptées non décodées sont inaccessibles à l'extérieur du circuit.

Selon un mode de réalisation de la présente invention, le circuit de filtrage comprend un premier filtre commandé par un analyseur de code de début d'image, pour ne pas laisser passer le premier code de début d'image détecté et les données suivantes dans le paquet de données dont l'en-tête a été marqué, pour ne pas laisser passer les données d'image qui précèdent le premier code de début d'image détecté dans le paquet de données sélectionné suivant, et pour laisser passer toutes les autres données.

Selon un mode de réalisation de la présente invention, le circuit de filtrage comprend, en amont du premier filtre commandé, un second filtre commandé par un analyseur de paquets de données pour ne laisser passer que des données de codes de début d'images et d'images, l'analyseur de paquets de données étant en outre prévu pour, lorsqu'il détecte un paquet de données dont l'en-tête a été marqué, fournir à l'analyseur de code de début d'image un premier signal de commande, et fournir à l'analyseur de code de début d'image un deuxième signal de commande pour signaler le paquet de données sélectionné suivant.

Selon un mode de réalisation de la présente invention, la séquence d'images codées cryptées est mémorisée dans un disque numérique lu par un lecteur commandé par le microprocesseur.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1A à 1C illustrent le principe d'un circuit de décodage ainsi que son fonctionnement en mode normal et en lecture rapide ;
les figures 2A à 2C illustrent le cryptage de données codées ainsi que les problèmes que le cryptage entraîne pour une lecture rapide ;
la figure 3 illustre un premier mode de réalisation d'un circuit de décodage de données cryptées permettant une lecture rapide ;
la figure 4 représente un circuit de décodage de données cryptées permettant une lecture rapide selon la présente invention ;
la figure 5 illustre le traitement des données cryptées par le circuit de la figure 4 ;
la figure 6 représente plus en détail le circuit de filtrage de la figure 4 ; et
la figure 7 illustre le fonctionnement du circuit de la figure 6.

L'inventeur a tout d'abord pensé, pour réaliser un circuit de décodage de données cryptées qui permet une lecture rapide, à utiliser entre le lecteur de disque et le décodeur un circuit de décryptage dont la sortie est accessible par le microprocesseur, qui peut alors identifier les codes de début d'images décryptés.

La figure 3 illustre un circuit de décodage tel que celui de la figure 1A qui comporte en outre un circuit de décryptage 7 suivi d'un filtre commandé 9, insérés entre le lecteur de disque 1 et le décodeur 3. Le microprocesseur 5 est connecté de manière à recevoir les données décryptées D en sortie du circuit de décryptage 7. Le microprocesseur peut ainsi repérer les codes de début d'images SC des données D et commander au filtre 9 de supprimer les données décryptées n'appartenant pas aux images recherchées. Un tel circuit fonctionne bien, mais il est possible de copier ou de pirater les données décryptées en observant des bus du microprocesseur, accessibles facilement, ce qui n'est pas souhaitable. De plus, dans une telle configuration, le microprocesseur doit lire la totalité des données décryptées D pour y repérer les codes de début de données, ce qui accroît la charge de travail du microprocesseur.

On prévoit selon la présente invention un circuit de décodage permettant une lecture rapide, sans rendre possible le piratage des données décryptées et sans accroître la charge de travail du microprocesseur.

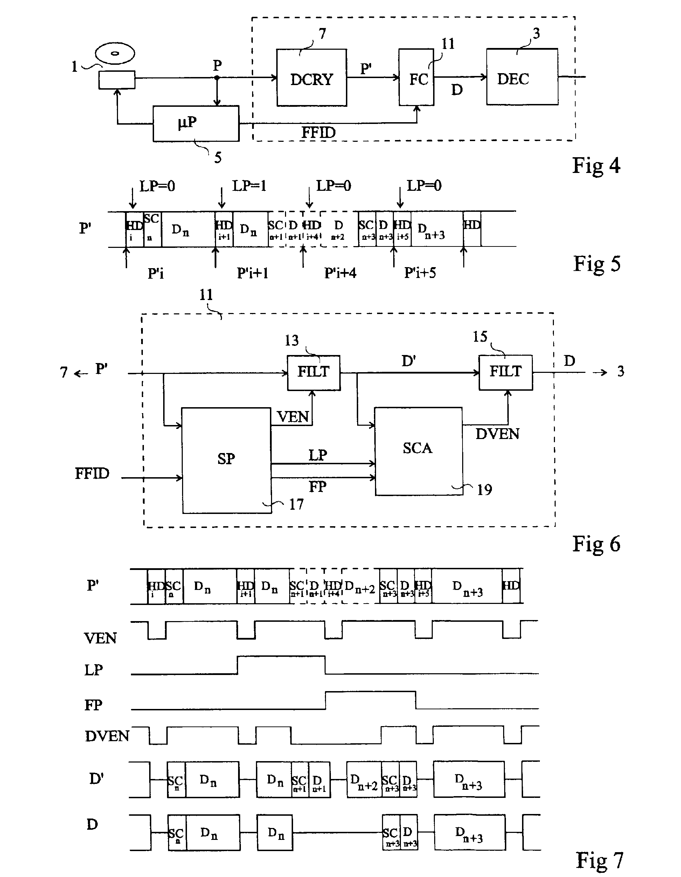

La figure 4 représente un circuit comportant un lecteur 1, un décodeur 3 et un microprocesseur 5. Ce circuit comprend en outre un décrypteur 7 suivi d'un circuit de filtrage 11, insérés entre le lecteur de disque 1 et le décodeur 3. Le microprocesseur 5 est connecté pour lire les en-têtes de paquets de données fournis au décrypteur 7, et pour y écrire s'il y a lieu. En outre, le microprocesseur commande le lecteur 1 et le circuit de filtrage 11. En fonctionnement normal, le microprocesseur 5 commande au lecteur 1 de fournir à la suite tous les paquets de données au décrypteur. Le décryptage des données est alors tel qu'illustré en figure 2B. En mode de lecture rapide, le microprocesseur 5 commande au lecteur 1 de ne fournir au décrypteur que les paquets de données contenant des données des images recherchées, comme cela est illustré en figure 2C. Lorsqu'on veut afficher deux images non consécutives, le microprocesseur repère par son en-tête le paquet de données qui contient les dernières données de la première image recherchée (ici, Dₙ), et il écrit une information de marquage dans cet en-tête. Le marquage de l'en-tête consiste à y insérer un code non utilisé dans la norme MPEG ou DVD.

En mode de lecture rapide, le microprocesseur fournit un signal de commande FFID au circuit de filtrage 11, qui se base sur les informations associées aux paquets de données pour supprimer les données décryptées qui ne concernent pas les images recherchées.

La figure 5 illustre ce fonctionnement. Des paquets de données P' représentent les paquets de données décryptées fournis par le décrypteur 7. Le paquet de données Pᵢ₊₁' contient les dernières données de l'image Dₙ. Son en-tête HDᵢ₊₁ a, comme on l'a vu, été marqué par le microprocesseur. Le circuit de filtrage 11 repère le paquet de données décryptées dont l'en-tête est marqué, et il y supprime le premier code de début d'image détecté ainsi que toutes les données qui suivent. Dans l'exemple illustré, le code de début d'image SCₙ₊₁ et les premières données de l'image Dₙ₊₁ sont supprimées du paquet de données Pᵢ₊₁' par le circuit de filtrage 11. De plus, dans le paquet de données suivant immédiatement le paquet de données marqué, le circuit de filtrage 11 supprime toutes les données fournies par le décrypteur jusqu'à ce qu'il détecte un code de début d'image. Dans l'exemple illustré, les données de l'image Dₙ₊₂ sont supprimées du paquet de données Pᵢ₊₄', qui suit le paquet de données Pᵢ₊₁'. Ainsi, le décodeur 3 ne reçoit que le code de début d'image SCₙ et les données de l'image Dₙ, et le code de début d'image SCₙ₊₃ et les données de l'image Dₙ₊₃.

On notera que la structure formée par le décrypteur 7, le circuit de filtrage 11 et le décodeur 3, qui permet d'atteindre ce résultat, est de préférence réalisée sous forme d'un circuit intégré monolithique pour mieux interdire d'accéder aux données décryptées à des fins de piratage. Le microprocesseur 5 qui n'a accès qu'aux paquets de données cryptées et à leur en-tête, ne lit ici que les en-têtes de données, ce qui limite beaucoup sa charge de travail.

La figure 6 représente un mode de réalisation du circuit de filtrage 11 de la figure 4. Un premier filtre commandé 13 est connecté pour recevoir des paquets de données décryptées P' produits par le circuit de décryptage 7 et pour fournir des données D' à un deuxième filtre commandé 15 qui fournit des données D au décodeur 3. Le filtre 13 est commandé par un analyseur de paquets de données 17 qui reçoit les paquets de données décryptées P', et un signal de commande de lecture rapide FFID provenant du microprocesseur 5. L'analyseur 17 fournit au filtre 13 un signal de validation de signaux vidéo VEN. Un analyseur de code de début d'image 19 est connecté pour recevoir les images décryptées D', ainsi que deux signaux LP et FP fournis par l'analyseur 17. L'analyseur 19 fournit un signal de commande (DVEN) au filtre 15.

La figure 7 illustre le fonctionnement du circuit de la figure 6. Jusqu'à présent, on a décrit les paquets de données cryptées comme ne contenant que des données vidéo, c'est-à-dire des codes de début d'images et des données d'images. Cependant, on a vu qu'un paquet de données peut contenir des données vidéo ou d'autres données, par exemple des données audio ou graphiques. La nature du contenu d'un paquet de données est indiquée dans les en-têtes des paquets de données. L'analyseur 17 reçoit les paquets de données décryptées P' et active le signal VEN lorsqu'il détecte des données vidéo, en l'occurrence les codes de début d'images SC et les données d'images D. Le filtre 13, commandé par le signal VEN, ne laisse passer que des codes de début d'images SC ou des données d'images D. Le fonctionnement et la structure d'un analyseur de paquets de données sont décrits en détail dans la demande de brevet américain numéro 08773958, où cet analyseur est appelé "SYSTEM PARSER". En outre, l'analyseur 17 est ici conçu pour détecter un paquet de données dont l'en-tête a été marqué. Lorsque l'analyseur 17 est en mode de lecture rapide, activé par le signal FFID fourni par le microprocesseur, il active le signal de commande LP durant tout le temps de transmission au décodeur 3 du paquet de données marqué. Ensuite, l'analyseur 17 active le signal de commande FP pendant tout le temps de transmission au décodeur 3 du paquet de données suivant. L'analyseur 19 reçoit les données décryptées D' en sortie du filtre 13. Il est conçu pour y repérer les codes de début d'image. Lorsque aucun des signaux de commande LP ou FP n'est actif, l'analyseur 19 commande le filtre 15 pour laisser passer toutes les données D'. Lorsque le signal de commande LP est activé, l'analyseur 19 commande le filtre 15 pour supprimer des données D' le premier code de début d'image détecté ainsi que les données qui le suivent. Dans l'exemple illustré, le code de début d'image SCₙ₊₁ et les premières données de l'image Dₙ₊₁ sont supprimées. Lorsque le signal de commande FP est activé, l'analyseur 19 supprime des données D' toutes les données d'image précédant le premier code de début d'image repéré. Dans l'exemple illustré, les données de l'image Dₙ₊₂, qui précèdent le code de début d'image SCₙ₊₃, sont supprimées. On notera que les paquets de données D' peuvent également ne contenir que des données recherchées. Dans un tel cas, l'analyseur 19 commande au filtre 15 de transmettre les données D' sans modifications.

Bien entendu, la présente invention est susceptible de diverses variantes et modifications qui apparaîtront à l'homme du métier. En particulier, on a décrit un système dans lequel le microprocesseur marque l'en-tête du paquet de données qui comprend les dernières données de la première image recherchée, mais on peut également imaginer qu'il fournit directement au circuit de filtrage 11 un signal pour indiquer la présence de ce paquet de données, plutôt que de marquer son en-tête.

La présente invention a été décrite dans le cadre d'un mode de lecture rapide d'un disque numérique, mais l'homme du métier adaptera aisément la présente invention à un autre dispositif dans lequel on veut décoder à la suite deux images non consécutives d'une séquence d'images codées cryptées.

## Revendications

1. Circuit intégré pour décoder des première et deuxième images recherchées (Dₙ, Dₙ₊₃) non consécutives prises dans une séquence d'images codées (Dₙ, Dₙ₊₁, Dₙ₊₂, Dₙ₊₃) séparées les unes des autres par des codes de début d'image (SC), ladite séquence étant tronçonnée en une pluralité de paquets de données cryptées (Pᵢ, Pᵢ₊₁, Pᵢ₊₂, Pᵢ₊₃, Pᵢ₊₄, Pᵢ₊₅, Pᵢ₊₆), les paquets ayant des longueurs fixes prédéterminées, chaque paquet comportant un en-tête non crypté (HD) d'identification, et étant notamment associé à des informations sur le numéro de la portion d'image qu'il contient, comprenant :
un processeur (5) pour sélectionner à partir desdites informations associées aux paquets de données cryptées, les paquets de données (Pᵢ, Pᵢ₊₁, Pᵢ₊₄, Pᵢ₊₅) qui contiennent des données des images recherchées (Dₙ, Dₙ₊₃) et pour marquer l'en-tête du dernier paquet de données cryptées contenant des données de la première image recherchée (Pᵢ₊₁),
un décrypteur (7) recevant les paquets de données sélectionnés,
un circuit de filtrage (11) placé en sortie du décrypteur pour :
supprimer les données décryptées (Dₙ₊₁) qui suivent le code de début d'image (SCₙ₊₁) dans le paquet de données dont l'en-tête a été marqué (Pᵢ₊₁), et
supprimer les données décryptées (Dₙ₊₂) qui précédent le code de début d'image (SCₙ₊₃) dans le paquet de données sélectionné suivant (Pᵢ₊₄), et
un décodeur (3) pour décoder les données décryptées.

2. Circuit intégré selon la revendication 1, caractérisé en ce que le décrypteur (7), le circuit de filtrage (11) et le décodeur (3) font partie d'un même circuit intégré (12) de sorte que les données décryptées non décodées sont inaccessibles à l'extérieur du circuit.

3. Circuit intégré selon l'une quelconque des revendications précédentes, caractérisé en ce que le circuit de filtrage (11) comprend un premier filtre (15) commandé par un analyseur de code de début d'image (19) pour :
ne pas laisser passer le premier code de début d'image détecté (SCₙ₊₁) et les données suivantes (Dₙ₊₁) dans le paquet de données dont l'en-tête a été marqué (Pᵢ₊₁),
ne pas laisser passer les données d'image (Dₙ₊₂) qui précèdent le premier code de début d'image détecté (SCₙ₊₃) dans le paquet de données sélectionné suivant (Pᵢ₊₄), et laisser passer toutes les autres données.

4. Circuit intégré selon la revendication 3, caractérisé en ce que le circuit de filtrage (11) comprend, en amont du premier filtre codé, un second filtre (13) commandé par un analyseur de paquets de données (17) pour ne laisser passer que des données de codes de début d'images et d'images, l'analyseur de paquets de données étant en outre prévu pour :
lorsqu'il détecte un paquet de données dont l'en-tête a été marqué (Pᵢ₊₁), fournir à l'analyseur de code de début d'image (19) un premier signal de commande (LP), et
fournir à l'analyseur de code de début d'image (19) un deuxième signal de commande (FP) pour signaler le paquet de données sélectionné suivant (Pᵢ₊₄).

5. Circuit intégré selon l'une quelconque des revendications précédentes, caractérisé en ce que la séquence d'images codées cryptées (Pᵢ, Pᵢ₊₁, Pᵢ₊₂, Pᵢ₊₃, Pᵢ₊₄, Pᵢ₊₅, Pᵢ₊₆) est mémorisée dans un disque numérique lu par un lecteur (1) commandé par le microprocesseur (5).
